# EUROPÄISCHE PATENTSCHRIFT

(11) **EP 1 367 280 B1**
(45) Veröffentlichungstag und Bekanntmachung des Hinweises auf die Patenterteilung: **27.07.2005**
(21) Anmeldenummer: 02012023.4
(22) Anmeldetag: 31.05.2002
(51) Int. Cl.: F16D 23/14, F16C 23/04

(54) **Ausrücker mit einer Einrichtung zum Ausgleich von Ungenauigkeiten in einer Reibungskupplung eines Kraftfahrzeuges**
Release device for a friction clutch of a motor vehicle having a device to correct for inaccuracies
Dispositif de débrayage avec appareil pour corriger des imprécisions dans un embrayage à friction d'automobile

(43) Veröffentlichungstag der Anmeldung: 03.12.2003
(73) Patentinhaber: ZF Sachs AG, 97424 Schweinfurt (DE)
(72) Erfinder: Voit, Herbert, Dipl.-Ing., 97422 Schweinfurt (DE); Brunner, Matthias, 97525 Schwebheim (DE)

(56) Entgegenhaltungen:
- FR-A- 2 601 094
- US-A- 3 741 361
- US-A- 3 948 371
- US-A- 5 842 550

## Beschreibung

Die Erfindung betrifft einen Ausrücker zur Betätigung einer Reibungskupplung zwischen einem Verbrennungsmotor und einem Getriebe eines Kraftfahrzeuges, als Zusammenbau konzentrisch angeordnet um eine auf einer Getriebewelle angeordneten Führungshülse, umfassend ein Ausrücklager mit einem Innenring, einem Außenring und eine Verstellhülse, wobei einer der Ringe mit einer Ausrückfeder der Reibungskupplung in Wirkverbindung steht und wobei der Zusammenbau des Ausrückers eine Einrichtung zum Ausgleich eines Schrägstandes der Mittelachse der Reibungskupplung zu der Mittelachse der Führungshülse und/oder eines Taumelschlages der Ausrückfeder aufweist.

Mit der DE 199 12 431 A1 ist eine Ausrückvorrichtung für eine gedrückte Reibungskupplung eines Kraftfahrzeugs bekannt geworden, die aus einem auf einer Schiebehülse angeordneten Ausrücklager und einer zur Reibungskupplung gehörigen, mit dem Ausrücklager in Wirkverbindung stehenden Tellerfeder besteht und die folgenden Merkmale aufweist:
- Zwischen der Tellerfeder und dem Ausrücklager sind zwei zu einander komplementäre Kugelflächensegmente aufweisende Bereiche vorgesehen;
- Beide die Kugelflächensegmente aufweisenden Bereiche sind mittelbar oder unmittelbar an der Tellerfeder vorgesehen;
- Die Kugelflächensegmente bildenden Bereiche sind gegen das Ausrücklager radial verschiebbar.

Die derart durch Kugelflächensegmente verbundenen Bereiche sind teilweise von den Zungen an der Tellerfeder gebildet beziehungsweise zwischen der Tellerfeder und einem als Anpressplatte des Ausrücklagers vorgesehenen Flanschteil angeordneten Ausgleichsring gegeneinander verschiebbar angeordnet.

Wenn komplementäre Kugelflächensegmente bei hoher Frequenz gegeneinander verschwenkt werden, sind diese einem ständigen Verschleiß unterworfen. Wenn die Elemente mit den komplementären Kugelflächensegmenten einen Schrägstand der Mittelachse der Reibungskupplung zu der Mittelachse der Führungshülse und/oder einen Taumelschlag der Ausrückfeder ausgleichen müssen, bewegen sich diese ständig gegeneinander, wobei speziell im Bereich des Ausrückers durch den Verschleiß der Reibungskupplung zusätzlicher Abrieb anfällt, der von den sich gegeneinander bewegenden Flächen nicht fern zu halten ist. Außerdem ist die Herstellung von zwei Elementen mit zueinander komplementär angeformten Kugelflächen sehr kostenintensiv.

Das US-Patent 5,842,550 beschreibt einen Ausrücker für eine gezogene Reibungskupplung, bei der zur Bildung einer Taumeleinrichtung zwei aneinander anliegende, als geschlossene Ringe geformte Hebelplatten korrespondierend ausgebildet sind und eine gemeinsame sphärische Fläche mit einem gemeinsamen, auf der Ausrückachse im Bereich des Schwungrades des Verbrennungsmotors liegenden Mittelpunkt aufweisen. Eine der Hebelplatten weist eine Konkavfläche auf und steht mit Federzungenenden einer Membranfeder in Wirkverbindung, während die andere, eine Konvexfläche aufweisende Hebelplatte mittels eines Sicherungsringes auf einer Verstellhülse des Ausrückers fixiert ist. Beim Auftreten einer Taumelbewegung der Kupplung relativ zum Ausrücker können somit die in Kontakt stehenden sphärischen Flächen aufeinander abgleiten.

Die Erfindung hat es sich zur Aufgabe gemacht, einen Ausrücker zur Betätigung einer Ausrückfeder einer Reibungskupplung eines Kraftfahrzeugs zu schaffen, der eine Einrichtung zum Ausgleich eines Schrägstandes der Mittelachse der Reibungskupplung zu der Mittelachse einer Führungshülse und/oder eines Taumelschlages der Ausrückfeder aufweist.

Die Aufgabe wird gelöst durch Ausrücker, welche die im Kennzeichen der Ansprüche 1 und 3 angegebenen Merkmale aufweisen. Weitere Ausgestaltungen der Erfindung sind den Unteransprüchen zu entnehmen.

Der gemäß Anspruch 1 vorgeschlagene Ausrücker weist eine Einrichtung aus mindestens zwei miteinander in Wirkverbindung stehenden Elementen zwischen der Ausrückfeder und der Verstellhülse auf, von denen nur eines, nämlich ein Ausrückring, eine Kugelfläche mit einem Radius ausgehend von der Drehachse der Getriebewelle aufweist. Das andere Element, ein zwischen dem Ausrückring und der Verstellhülse angeordneter Lastring, ist als offener Drahtring mit einem runden Querschnitt ausgeführt, der mit der konkaven Kugelfläche des Ausrückrings eine umlaufende Linienberührung aufweist. Der Drahtring lässt sich auf der Verstellhülse, wobei diese speziell bei gezogenen Ausrückern meist mit einem modifizierten Innenring des Ausrücklagers identisch ist, einfach in einer dort angeordneten Nut montieren, nachdem man den Ausrückring auf die Verstellhülse aufgeschoben hat. Der Ausrückring kommt so über eine ringförmige Kontaktstelle mit der Ausrückfeder der Reibungskupplung in Druckkontakt, der durch eine Haltefeder aufrecht erhalten wird. Taumelt die Ausrückfeder, so macht der Ausrückring diese Bewegung mit und gleitet auf dem Drahtring, ohne diese Bewegung auf die Verstellhülse zu übertragen. Je nach der Größe der Ausschläge und des Durchmessers des Drahtrings muss dem kleinsten Durchmesser des Ausrückrings durch die Anordnung einer Aussparung Platz geschaffen werden, um eine Berührung des Ausrückrings mit der Verstellhülse zu vermeiden.

Der Verschleiß verringert sich bei der vorgeschlagenen Lösung dadurch, dass der Drahtring mit der ringförmigen Kugelfläche des Ausrückrings beim Verschwenken speziell im hochfrequenten Betrieb, nicht wie der Profilring ausschließlich einer Gleitreibung, sondern zumindest im Bereich von Mikrobewegungen des Drahtringes teilweise einer rollenden Reibung unterliegt. Hierbei ist es für die Verschleißentwicklung von Vorteil, die Kugelfläche des Ausrückrings mit einer Lebensdauerschmierung zu versehen.

Gemäß Anspruch 3 wird ein Ausrücker vorgeschlagen, mit dem eine bezüglich des vorangehend beschriebenen Ausrückers umgekehrte Anordnung der Wirkungspartner in einem hydraulisch betätigten Ausrücker realisiert werden kann, wobei der Drahtring mit dem Ausrückring und die Kugelfläche mit der Verstellhülse verbunden ist. Die Nut für den Drahtring ist am Innendurchmesser des Ausrückrings angeordnet, während die Verstellhülse eine Ringnut aufweist, die groß genug ist, um eine vorzugsweise konvexe Kugelfläche auf zu nehmen. Bei der Montage des Ausrückrings auf der Verstellhülse wird der Drahtring in die Ringnut eingelegt und der Ausrückring, der eine Schräge aufweist, aufgeschoben. Der Drahtring wird von einer radial verlaufenden Nutflanke der Ringnut fest gehalten und gleitet an der Schräge des Ausrückrings so weit nach radial innen, bis er in seine entgültige Position in der Nut einschnappen kann.

Als eine vorteilhafte Gestaltung des Erfindungsgegenstandes stellt sich eine Variante zu der gemäß Anspruch 1 vorbeschriebenen Ausführung dar, nämlich ein Ausrücker mit einer Montageerleichterung durch eine Schnappverbindung zwischen dem Drahtring und der Verstellhülse, die zu diesem Zweck an ihrer Stirnseite eine Schräge aufweist. Die Nut für den Drahtring ist für die vorbeschriebene Montage des Ausrückrings breiter ausgeführt, was auf die Funktion des Ausrückers ohne Einfluss ist. Ebenso ist in der Nachbarschaft der Nut, wie vorher beschrieben, eine Aussparung zur Vermeidung einer Berührung des Ausrückrings mit der Verstellhülse angeordnet.

Gemäß der unabhängigen Ansprüche, ist der Drahtring offen und kann bei seiner Montage einfach in seine Nut eingeschnappt werden. Wahlweise besteht die Möglichkeit, die beiden Enden des Drahtrings durch einen Verschluss zu verbinden, wobei dieser Verschluss eine Zugspannung auf den Drahtring ausüben kann, die ein höheres Maß an Sicherheit gegen Herausspringen des Drahtrings bei hohen Drehzahlen des Antriebsaggregats bietet.

Anhand von Zeichnungen werden mehrere Ausführungsbeispiele eines Ausrückers mit einer Einrichtung zum Ausgleich von Laufungenauigkeiten der Mittelachse der Ausrückfeder und der Mittelachse des Ausrückers erläutert. Es zeigen:
- Fig.1: einen Ausrücker mit einer Verstellhülse, auf der ein Profilring und ein mit diesem eine gemeinsame Kugelfläche bildender Ausrückring angeordnet sind, im Schnitt;
- Fig.2: einen Ausrücker mit einem Ausrückring, dessen konkave Kugelfläche mit einem Drahtring in einer Nut der Verstellhülse zusammenwirkt, im Teilschnitt;
- Fig.3: eine Variante eines Ausrückers mit einer Schnappverbindung zwischen dem Ausrückring und einem Zusammenbau der Verstellhülse mit dem Drahtring im Teilschnitt;
- Fig.4: die Anordnung des Ausrückrings und eine Aussparung als Freigang für seinen Bewegungsweg als Ausschnitt aus Fig.3;
- Fig.5: eine Umkehrung der Anordnung der Wirkungspartner, nämlich der Kugelfläche und des Drahtrings, in einem hydraulisch betätigten Ausrücker

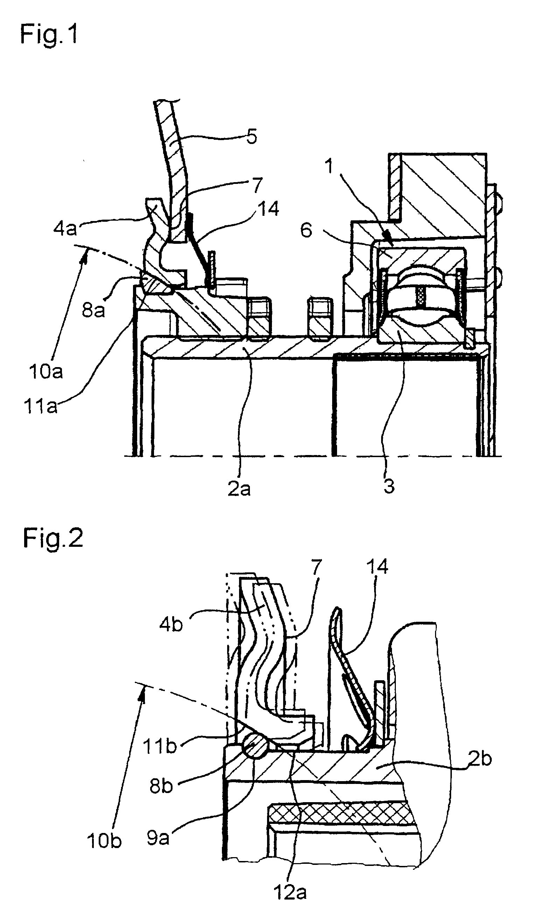

Fig.1 zeigt einen Ausrücker zum Betätigen einer Reibungskupplung über eine Ausrückfeder 5, wobei der Ausrücker ein Ausrücklager 1 aufweist, das ein Kugellager mit einem Innenring 3 und einem Außenring 6 ist und wobei der Innenring 3 mit einer Verstellhülse 2a verbunden ist, die über einen Zwischenring einen Lastring 8a trägt, der mit einem Ausrückring 4a eine gemeinsame Kugelfläche 11a als Lagerfläche hat. Der Ausrückring 4a steht mit der Ausrückfeder 5 über eine Kontaktstelle 7 in Druckkontakt, der durch eine Haltefeder 14 aufrecht erhalten wird. Die konvexe ringförmige Kugelfläche 11a liegt in der konkaven ringförmigen Kugelfläche 11a des Ausrückrings 4a und bildet mit dieser ein Kugelgelenk mit einem Zentrum als Ausgangspunkt von einem Radius 10a, um das der Ausrückring 4a verschwenkt werden kann.

Gemäß Fig.2 ist ein Ausschnitt eines Ausrückers dargestellt, dessen Verstellhülse 2b eine Nut 9a aufweist, in der ein Drahtring 8b angeordnet ist, der mit einer konkaven Kugelfläche 11b an einem Ausrückring 4b zusammenwirkt, wobei die Kugelfläche 11b einem Radius 10b aufweist. Der Ausrückring 4b ist in einer normalen und zwei verschwenkten Positionen dargestellt, um dar zu stellen, dass am Durchmesserbereich neben der Nut 9a eine Aussparung 12a angeordnet sein muss, um dem Ausrückring 4b ausreichend Freiraum zum Verschwenken zu gewähren.

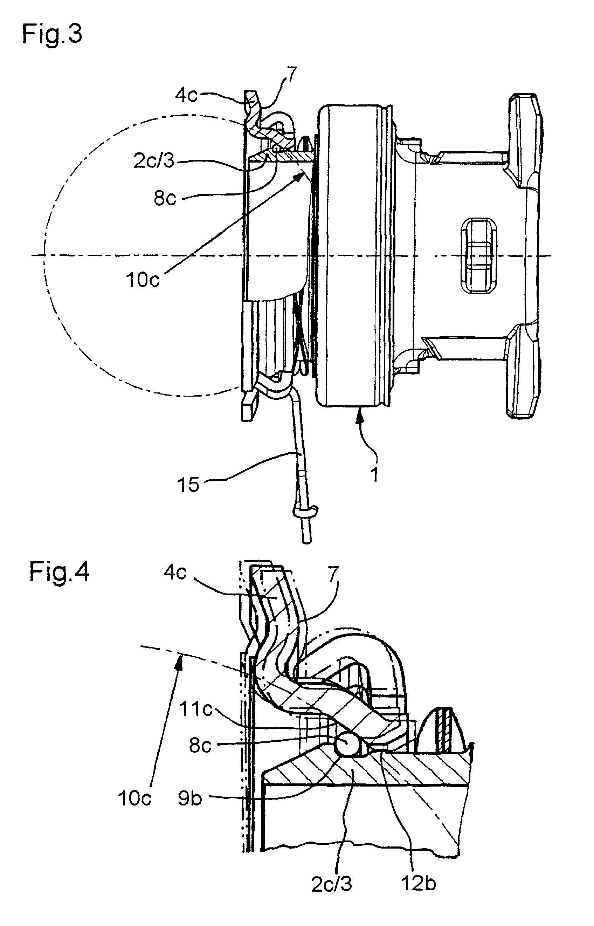

Aus den Fig.3 und 4 ist ersichtlich, dass ein Ausrückring 4c über einen Drahtring 8c mit einer Verstellhülse 2c in Wirkverbindung steht, wobei der Drahtring 8c in einer Nut 9b in der Verstellhülse 2c angeordnet ist und mit einer konkaven Kugelfläche 11c am Ausrückring 4c zusammenwirkt, wobei die Kugelfläche 11c einem Radius 10c aufweist. Die Verstellhülse 2c ist zugleich der Innenring 3 und weist an seiner Stimseite eine Schräge auf, die eine Vereinfachung der Montage der Verstellhülse 2c mir dem Ausrückring 4c durch Einschieben zu einer Schnappverbindung ermöglicht.
Wie bereits erwähnt, ist der Drahtring 8c offen und kann so in seine Nut 9b eingelegt werden. Wahlweise besteht die Möglichkeit, die beiden Enden des Drahtrings 8c durch einen Verschluss 15 zu verbinden, wobei dieser Verschluss 15 je nach Platzangebot im Ausrücker spangenartig ausgebildet sein kann, da Fliehkräfte die Haltekraft des Verschlusses noch unterstützen.

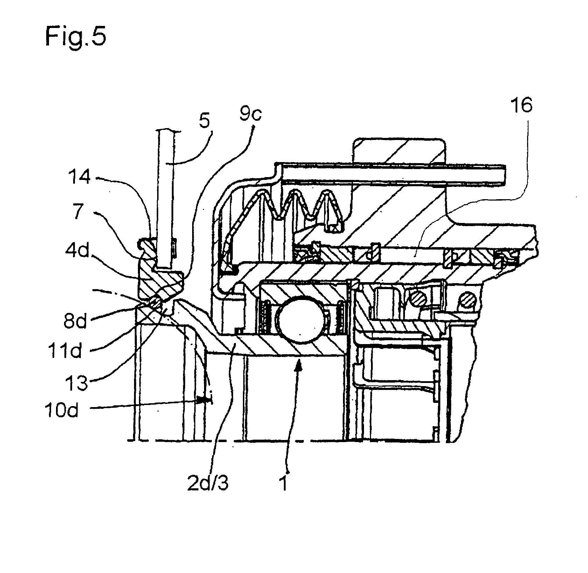

Fig.5 zeigt schließlich einen über eine hydraulische Verstelleinrichtung 16 betätigten Ausrücker, wo als Umkehrung der Anordnung der Wirkungspartner ein Drahtring 8d mit einem Ausrückring 4d und eine Kugelfläche 11d mit einer Verstellhülse 2d verbunden ist. Für den Drahtring 8d ist am Innendurchmesser des Ausrückrings 4d eine Nut 9c angeordnet, während die Verstellhülse 2d, die gleichermaßen der Innenring 3 des Ausrücklagers 1 ist, eine Ringnut 13 aufweist, die die konvexe Kugelfläche 11d mit einem Radius 10d aufnimmt.

### Bezugszeichenliste

- 1: Ausrücklager
- 2a,2b,2c,2d: Verstellhülse
- 3: Innenring
- 4a,4b,4c,4d: Ausrückring
- 5: Ausrückfeder
- 6: Außenring
- 7: Kontaktstelle
- 8a,8b,8c,8d: Lastring, insbesondere Drahtring
- 9a,9b,9c: Nut
- 10a, 10b, 10c, 10d: Radius
- 11a, 11b, 11c, 11d: Kugelfläche
- 12a,12b: Aussparung
- 13: Ringnut
- 14: Haltefeder
- 15: Verschluss
- 16: hydraulische Verstelleinrichtung

## Patentansprüche

1. Ausrücker zur Betätigung einer Reibungskupplung zwischen einem Verbrennungsmotor und einem Getriebe eines Kraftfahrzeuges, als Zusammenbau konzentrisch angeordnet um eine auf einer Getriebewelle angeordneten Führungshülse, umfassend ein Ausrücklager (1) mit einem Innenring (3), einem Außenring (6) und einer Verstellhülse (2a, 2b, 2c), wobei einer der Ringe (3, 6) mit einer Ausrückfeder (5) der Reibungskupplung in Wirkverbindung steht und wobei der Zusammenbau des Ausrückers eine Einrichtung zum Ausgleich eines Schrägstandes der Mittelachse der Reibungskupplung zu der Mittelachse der Führungshülse und/oder eines Taumelschlages der Ausrückfeder (5) aufweist, wobei ein an der Ausrückfeder (5) angreifendet Ausrückring (4b, 4c) versehen ist, an dem eine Kugelfläche (11b, 11c) mit einem Radius (10b, 10c) ausgehend von der Mittelachse der Getriebewelle ausgebildet ist
**dadurch gekennzeichnet, dass** die Einrichtung umfasst: einen Lastring (8b, 8c), der offen gestaltet und aus einem Draht mit einem runden Querschnitt geformt ist und in einer Nut (9a,9b) in der Verstellhülse (2b,2c) axial fixiert angeordnet ist und mit der Kugelfläche (11b,11c) des Ausrückrings (4b, 4c) in Wirkverbindung steht.

2. Ausrücker nach Anspruch 1,
**dadurch gekennzeichnet, dass** die Verstellhülse (2b,2c) eine Aussparung (12a,12b) aufweist, die ausreichend Raum für das Verschwenken des Ausrückrings (4b,4c) bietet.

3. Ausrücker zur Betätigung einer Reibungskupplung zwischen einem Verbrennungsmotor und einem Getriebe eines Kraftfahrzeuges, als Zusammenbau konzentrisch angeordnet um eine auf einer Getriebewelle angeordneten Führungshülse, umfassend ein Ausrücklager (1) mit einem Innenring (3), einem Außenring (6) und einer Verstellhülse (2a, 2b, 2c), wobei einer der Ringe (3, 6) mit einer Ausrückfeder (5) der Reibungskupplung in Wirkverbindung steht und wobei der Zusammenbau des Ausrückers eine Einrichtung zum Ausgleich eines Schrägstandes der Mittelachse der Reibungskupplung zu der Mittelachse der Führungshülse und/oder eines Taumelschlages der Ausrückfeder (5) aufweist,
**dadurch gekennzeichnet, dass** die Einrichtung umfasst:
- einen an der Ausrückfeder (5) angreifenden Ausrückring (4d) mit einer an dessen Innendurchmesser geformten Nut (9c), in der axial fixiert ein Lastring (8d) angeordnet ist, der offen gestaltet und aus einem Draht mit einem runden Querschnitt geformt ist und
- eine an der Verstellhülse (2d) ausgebildete Ringnut (13), die eine Kugelfläche (11d) mit einem Radius (10d) ausgehend von der Mittelachse der Getriebewelle umfasst, wobei die Kugelfläche (11d) mit dem Lastring (8d) in Wirkverbindung steht.

4. Ausrücker nach einem der vorhergehenden Ansprüche,
**dadurch gekennzeichnet, dass** der Lastring (8b, 8d) axial etwa auf Höhe der Ausrückfeder (5) angeordnet ist.

5. Ausrücker nach einem der vorhergehenden Ansprüche 1 bis 3,
**dadurch gekennzeichnet, dass** der Lastring (8c) axial zwischen der Ausrückfeder (5) und dem Ausrücklager (1) angeordnet ist.

6. Ausrücker nach einem der vorhergehenden Ansprüche,
**dadurch gekennzeichnet, dass** der Lastring (8b, 8c, 8d) einen Verschluss zur Schnellmontage aufweist.

## Claims

1. Clutch operator for actuating a friction clutch between an internal combustion engine and a gearbox of a motor vehicle, arranged concentrically as an assembly about a guide sleeve which is arranged on a gearbox shaft, comprising a disengagement bearing (1) with an inner ring (3), an outer ring (6) and an adjustment sleeve (2a, 2b, 2c), one of the rings (3, 6) being operatively connected to a disengagement spring (5) of the friction clutch, and the assembly of the clutch operator having a device for compensating for an oblique position of the centre axis of the friction clutch with respect to the centre axis of the guide sleeve and/or for compensating for tumble of the disengagement spring (5), a disengagement ring (4b, 4c) which acts on the disengagement spring (5) being provided, on which disengagement ring (4b, 4c) a spherical surface (11b, 11c) having a radius (10b, 10c) is formed, starting from the centre axis of the gearbox shaft, **characterized in that** the device comprises: a load ring (8b, 8c) which is of open design, is shaped from a wire with a round cross section, is fixed axially in a groove (9a, 9b) in the adjustment sleeve (2b, 2c) and is in operative contact with the spherical surface (11b, 11c) of the disengagement ring (4b, 4c).

2. Clutch operator according to Claim 1, **characterized in that** the adjustment sleeve (2b, 2c) has a cut-out (12a, 12b) which offers sufficient room for the disengagement ring (4b, 4c) to pivot.

3. Clutch operator for actuating a friction clutch between an internal combustion engine and a gearbox of a motor vehicle, arranged concentrically as an assembly about a guide sleeve which is arranged on a gearbox shaft, comprising a disengagement bearing (1) with an inner ring (3), an outer ring (6) and an adjustment sleeve (2a, 2b, 2c), one of the rings (3, 6) being operatively connected to a disengagement spring (5) of the friction clutch, and the assembly of the clutch operator having a device for compensating for an oblique position of the centre axis of the friction clutch with respect to the centre axis of the guide sleeve and/or for compensating for tumble of the disengagement spring (5), **characterized in that** the device comprises:
- a disengagement ring (4d) which acts on the disengagement spring (5) and has a groove (9c) formed on its inner diameter, in which groove (9c) a load ring (8d) is fixed axially which is of open design and is shaped from a wire with a round cross section, and
- an annular groove (13) which is formed on the adjustment sleeve (2d) and encloses a spherical surface (11d) with a radius (10d), starting from the centre axis of the gearbox shaft, the spherical surface (11d) being in operative contact with the load ring (8d).

4. Clutch operator according to one of the preceding claims, **characterized in that** the load ring (8b, 8d) is arranged axially approximately at the level of the disengagement spring (5).

5. Clutch operator according to one of the preceding Claims 1 to 3, **characterized in that** the load ring (8c) is arranged axially between the disengagement spring (5) and the disengagement bearing (1).

6. Clutch operator according to one of the preceding claims, **characterized in that** the load ring (8b, 8c, 8d) has a closure for rapid installation.

## Revendications

1. Butée d'embrayage pour actionner un embrayage à friction entre un moteur à combustion interne et une boîte de vitesses d'un véhicule automobile, disposée, en tant qu'ensemble, de manière concentrique autour d'un manchon-guide placé sur un arbre de transmission, comprenant un palier (1) de butée d'embrayage avec une bague intérieure (3), une bague extérieure (6) et un manchon de réglage (2a, 2b, 2c), où une des bagues (3, 6) est en liaison active avec un ressort de débrayage (5) de l'embrayage à friction et où l'ensemble de butée d'embrayage présente un dispositif servant à compenser une position inclinée de l'axe central de l'embrayage à friction par rapport à l'axe central du manchon-guide et/ou un battement du ressort de débrayage (5),
sachant que l'on a prévu une bague de débrayage (4b, 4c) agissant sur le ressort de débrayage (5), bague sur laquelle une surface sphérique (11b, 11c) est réalisée avec un rayon (10b, 10c) partant de l'axe central de l'arbre de transmission.
**caractérisée en ce que** le dispositif comprend une bague de charge (8b, 8c), qui est constituée d'une manière ouverte et est formée d'un fil présentant une section transversale circulaire, qui est disposée de manière fixe axialement dans une gorge (9a, 9b) du manchon de réglage (2b, 2c) et qui est en liaison active avec la surface sphérique (11b, 11c) de la bague de débrayage (4b, 4c).

2. Butée d'embrayage selon la revendication 1,
**caractérisée en ce que** le manchon de réglage (2b, 2c) présente un dégagement (12a, 12b) qui offre suffisamment de place pour le pivotement de la bague de débrayage (4b, 4c).

3. Butée d'embrayage pour actionner un embrayage à friction entre un moteur à combustion interne et une boîte de vitesses d'un véhicule automobile, disposée, en tant qu'ensemble, de manière concentrique autour d'un manchon-guide placé sur un arbre de transmission, comprenant un palier (1) de butée d'embrayage avec une bague intérieure (3), une bague extérieure (6) et un manchon de réglage (2a, 2b, 2c), où une des bagues (3, 6) est en liaison active avec un ressort de débrayage (5) de l'embrayage à friction et où l'ensemble de butée d'embrayage présente un dispositif servant à compenser une position inclinée de l'axe central de l'embrayage à friction par rapport à l'axe central du manchon-guide et/ou un battement du ressort de débrayage (5),
**caractérisée en ce que** le dispositif comprend :
- une bague de débrayage (4d) agissant sur le ressort de débrayage (5) avec une gorge (9c) pratiquée sur son diamètre intérieur et dans laquelle est disposée une bague de charge (8d) fixe axialement, celle-ci étant constituée de manière ouverte et étant formée d'un fil présentant une section transversale circulaire et
- une gorge annulaire (13) pratiquée sur le manchon de réglage (2d) et qui comprend une surface sphérique (11d) avec un rayon (10d) partant de l'axe central de l'arbre de transmission, la surface sphérique (11d) se trouvant en liaison active avec la bague de charge (8d).

4. Butée d'embrayage suivant l'une quelconque des revendications précédentes, **caractérisée en ce que** la bague de charge (8b, 8d) est disposée axialement à peu près à hauteur du ressort de débrayage (5).

5. Butée d'embrayage suivant l'une quelconque des revendications précédentes 1 à 3, **caractérisée en ce que** la bague de charge (8c) est disposée axialement entre le ressort de débrayage (5) et le palier (1) de butée d'embrayage.

6. Butée d'embrayage suivant l'une quelconque des revendications précédentes, **caractérisée en ce que** la bague de charge (8b, 8c, 8d) présente une fermeture pour un montage rapide.
